# EUROPEAN PATENT APPLICATION

(11) **EP 0 676 318 A2**
(43) Date of publication of application: **11.10.1995**
(21) Application number: 95302217.5
(22) Date of filing: 03.04.1995
(51) Int. Cl.: B60R 25/00, B60R 25/08, E05B 67/36

(54) **Lock**

(30) Priority: 09.04.1994 GB 9407083
(71) Applicant: LOCKIT TECHNOLOGIES NOTTINGHAM UK LIMITED, Nottingham NG3 5ED (GB)
(72) Inventor: Rhodes, John, Nottingham, NG3 5ED (GB)

(57) **Abstract**

A lock (10) suitable for use with a disc of a motorcycle disc brake. The lock (10) comprises locking means (14) and an insertion member (22) movable between a locked position and an unlocked position. The lock (10) also includes a holding member (16) wherein the insertion member (22) extends between the holding member (16) and the locking means (14) when the insertion member (22) is in the locked position. The insertion member (22) can be inserted through an article to be locked when the insertion member (22) is moved to the locked position.

## Description

This invention relates to locks, particularly, but not exclusively to motorcycle locks. More particularly the invention relates to motorcycle disc brake locks.

Theft of vehicles, particularly cars and motorcycles is rife. Various means have been taken to try to prevent such thefts. Motorcycles are often locked by the use of a large padlock and chain. The disadvantage of such locks is that they are bulky, thereby making them difficult to store when not in use.

An alternative method has been the use of a caliper to be locked to the disc brake of the motorcycle. Disc brakes are provided with a plurality of apertures extending around the disc to allow for the drainage of water. The caliper lock works by the insertion of one of the calipers through the apertures in the disc and then securing it to the lock. The disadvantage of such a lock is that it is fairly large, thereby making it difficult to carry when not in use.

It is an object of this invention to obviate and/or mitigate the above disadvantages.

According to one aspect of this invention there is provided a lock comprising locking means, an insertion member movable between a locked position and an unlocked position, and a holding member wherein the insertion member extends between the holding member and the locking when the insertion member is in the locked position, whereby the insertion member can be inserted through an article to be locked when the insertion member is moved to the locked position. Thus, a portion of the article to be locked can be held between the locking means and the holding member when the insertion member is inserted through said article.

Preferably, the insertion member is substantially straight and may be in the form of a pin. The insertion member may be rotatable about its longitudinal axis.

The lock may include a main body and, in a first embodiment, the main body may comprise said locking means and said holding member. In a second embodiment, the holding member may be separate from said main body and may be provided on the insertion member.

In the first embodiment, the insertion member is retracted into the locking means when the insertion member is moved to the unlocked position. In the second embodiment, the insertion member is removed from the main body when the insertion member is moved to the unlocked position.

In the first embodiment, the locking means and the holding member define therebetween a recess for receiving a portion of the article to be locked therein.

The locking means may comprise a locking mechanism and a plunging mechanism to move the insertion member. The plunging mechanism may comprise a plunger movable between locked and unlocked positions, the plunger being secured to the insertion member, and the plunger mechanism preferably further including resilient urging means to urge the plunger towards its unlocked position whereby when said plunger is moved to is unlocked position, the insertion member is also moved to its unlocked position.

Preferably, the resilient urging means is arranged between the main body and the plunger and may comprise a compression spring.

The plunger mechanism may further include a stop member which is preferably elongate, to prevent movement of said plunger beyond said unlocked position, thereby to prevent removal of the plunger from the main body.

The plunger may define a slot having opposite ends through which said stop member may extend, whereby the stop member engages one end of said slot when the plunger is in the unlocked position, to prevent removal thereof.

The insertion member may be provided with at least one rib adapted to be engaged by a locking member activated by the locking mechanism, wherein the locking member prevents movement of the insertion member to the unlocked position.

The lock may further comprise attachment means to attach a key for the locking means to the lock. The attachment means may comprise detent means comprising a female portion and a male portion, the male portion being adapted to be received in the female portion. One of said male and female portions may comprise a rebate and the other of said male and female portions may comprise at least one projection adapted to be received in the rebate, wherein when the, or each, projection is received in said rebate, the male and female portions are attached together. Preferably, the, or each, projection is movable from a projecting position to a non-projecting position, whereby when the, or each, projection is in the non-projecting position, insertion of the male portion into the female portion is facilitated.

The recess may be defined by a female portion, and the projections may be provided on the male portion.

The male portion may include a shaft extending therethrough to prevent movement of the, or each, projection to the non-projecting position. The shaft may include a rebate and may be movable, whereby when the rebate is aligned with the, or each, projection, the or each, projection can move to the non-projecting position to enable the male portion to be inserted into the female portion.

Biassing means, which may be in the form of a compression spring, may be provided to bias the shaft to a position where the rebate is substantially unaligned with said projections. Thus, pushing the shaft against the action of the biassing means moves the shaft to a position where the projections are aligned with the rebate allowing the male and female portions to be separated from each other if attached together or detached from each other if separated.

According to another aspect of this invention there is provided a motorcycle disc lock comprising a main body comprising a locking means and a holding member, wherein a recess is defined between the locking means and the holding member, and a pin movable between a locking position and an unlocked position, wherein when the pin is in the locked position, the pin extends between the locking means and the holding member, whereby a portion of a motorcycle disc lock can be received in the recess and the pin can be inserted through an aperture in the disc lock to the locked position to lock the motorcycle disc lock to the disc.

The motorcycle disc lock may comprise any or all of the features described in paragraphs 5 to 17 above.

An embodiment of the invention will now be described by way of example only with reference to the accompanying drawings in which:-
Fig. 1 is an end view of a lock;
Fig. 2 is a side view of the lock shown in Fig. 1 with the insertion member in the locked position;
Fig. 3 is a view similar to Fig. 2 but with the insertion member in the unlocked position; and
Fig. 4 is an enlarged part sectioned view of the area marked X in Figs. 2 and 3.

Referring to the drawings, there is shown a motorcycle disc lock generally designated 10, which comprises a main body 12 formed of hardened steel. The main body 12 comprises locking means 14 and a holding member 16.

The locking means 14 comprises a locking mechanism 18 which is a standard locking mechanism and does not form part of the present invention. The locking means 14 further comprises a plunger mechanism 20.

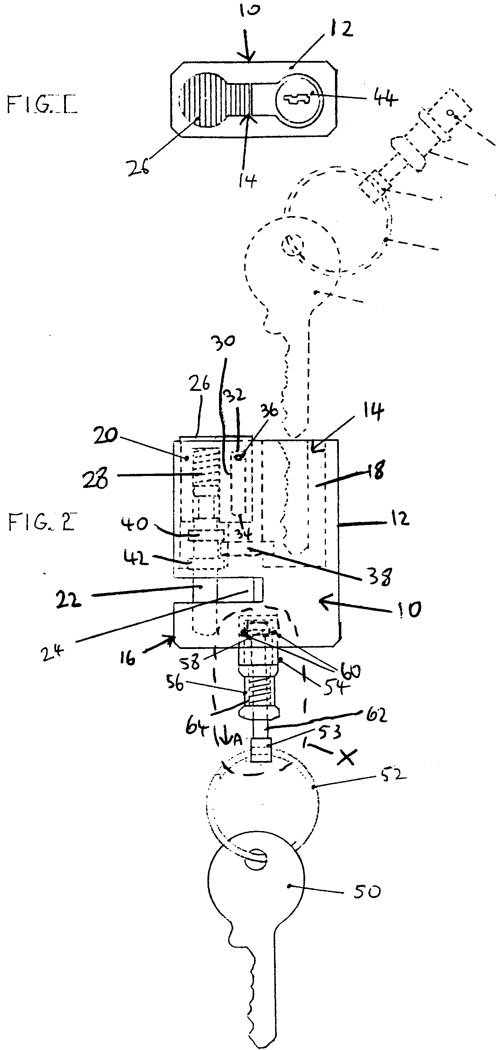

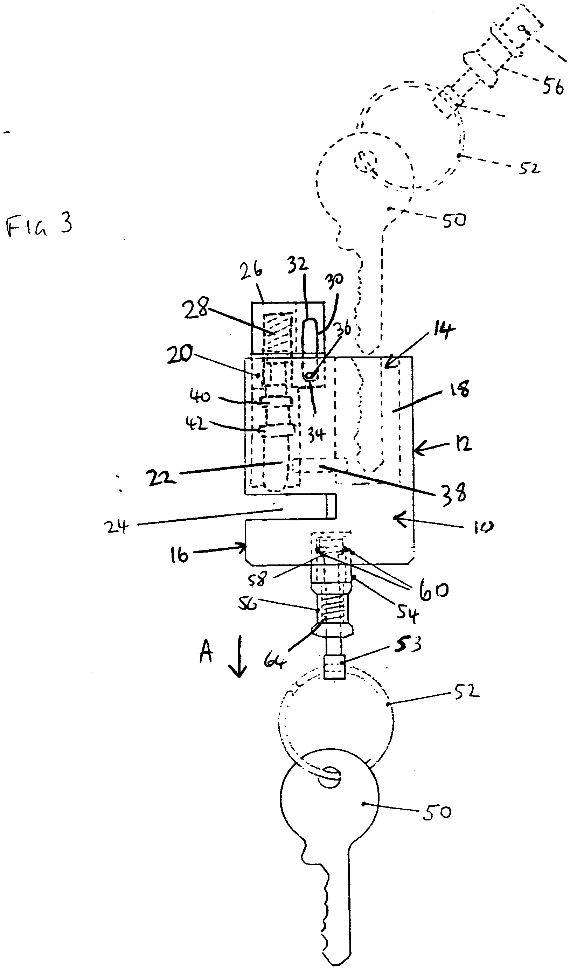

An insertion member in the form of a pin 22 is mounted on the plunger mechanism 20 for free rotation about its longitudinal axis. As can be seen, the pin 22 is movable from a locked position shown in Fig. 2 to an unlocked position shown in Fig. 3.

A recess 24 is provided between the main body 12 and the holding member 16. As can be seen from Fig. 2, when the pin 22 is in the locked position it extends across the recess 24 and is received in the holding member 16. An appropriate aperture is provided in the holding member 16 for the pin 22, and a corresponding aperture is similarly provided in the main body 12.

The plunger mechanism 20 comprises a plunger 26, and resilient urging means in the form of a compression spring 28. The plunger 26 defines a slot 30 having opposite ends 32, 34. An elongate stop member 36 extends through the slot 30. When the plunger 26 is in the unlocked position, as shown in Fig. 3, the end 34 of the slot 30 engages the stop 36, thus preventing the plunger 26 from being removed from the main body 12. When the plunger 26 is in the locked position, as shown in Fig. 2, the end 32 of the slot 30 engages the stop member 36.

A locking member 38 extends from the locking member 18 to the pin 22. The pin 22 comprises first and second ribs 40, 42 and the locking member 38 can be received between the ribs 40, 42 to prevent movement of the pin 22 when the pin 22 is in the locked position, as shown in Fig. 2.

The locking mechanism 14 defines a key hole 44 (see Fig. 1) to receive a key 50 therein (see below).

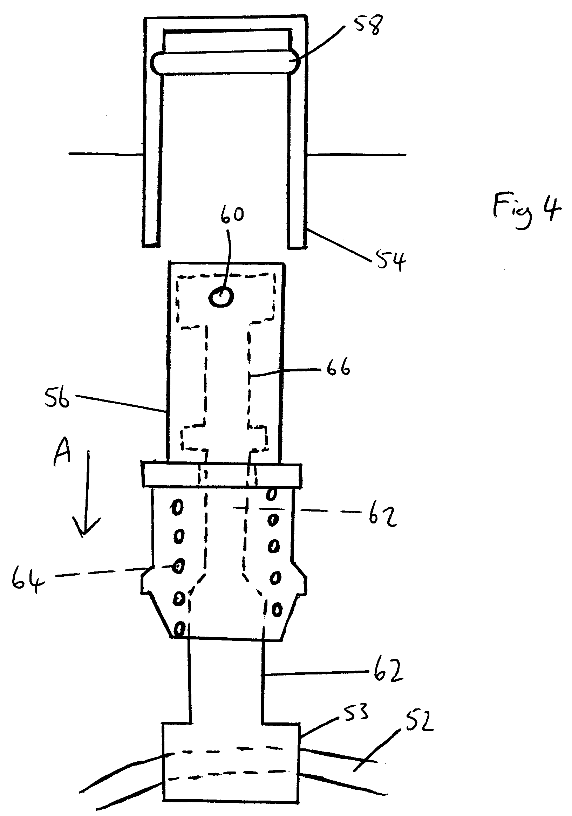

Referring to Figs. 2 and 3, and particularly to Fig. 4 which shows an enlarged view of the area marked X in Figs. 2 and 3 a key 50 is shown to operate the locking mechanism 18. The key 50 is attached by a keyring 52 to attachment means to attach the keyring 52 to the lock 10.

The attachment means comprises a female portion 54 which is mounted on the main body 12 of the lock 10 and a male portion 56 which can be received in the female portion 54. The keyring 52 extends through a connection member 53 defining a bore therethrough. The female portion 54 defines a rebate in the form of a circularly extending groove 58 into which projections, in the form of ball-bearings 60 can be received to secure the male portion 56 to the female portion 54. A shaft 62 extends through the male portion 54 to prevent retraction of the ball-bearings 60. Biassing means, in the form of a spring 64 urges the shaft 62 in the direction of the arrow A. The shaft 62 is provided with a narrow portion 66 which, when aligned with the ball-bearings 60, enables the ball-bearing 60 to be retracted into the male portion 56, thereby allowing removal of the male portion 56 when secured therein, or insertion of the male portion 56 when separated therefrom.

When the male portion 56 has been detached from the female portion 54, the key 50 can then be inserted in the key hole 44 to actuate the locking mechanism 18 and retract the locking member 38 from between the ribs 40, 42. The spring 28 then urges the pin 22 from the locked position shown in Fig. 2, to the unlocked position shown in Fig. 3. The lock 10 can then be secured to the disc of a motorcycle disc brake and the plunger 26 can then be pushed inwardly of the lock 10 to return the pin 22 to the locked position through a hole (not shown) in the disc. In this way, the lock 10 is secured to the disc of the motorcycle disc brake.

It is an advantage of the embodiment described above, that it is small and easily carried, for example, the lock 10 can be stored in a carrying case as a key fob. If the keyring 52 also holds the motorcycle key, then it will not be possible for the motorcycle to be ridden by the owner without taking with him the lock 10.

Various modifications can be made to the invention without departing from the scope. For example, the pin 22 could be removable from the locking means 14 and the holding member 16 could be in the form of a head fixedly mounted on the pin 22.

## Claims

1. A lock comprising locking means, and an insertion member movable between a locked position and an unlocked position, characterised by a holding member wherein the insertion member extends between the holding member and the locking means when the insertion member is in the locked position, whereby the insertion member can be inserted through an article to be locked when the insertion member is moved to the locked position.

2. A lock according to claim 1, characterised in that the insertion member is in the form of a substantially straight pin, said pin being rotatable about its longitudinal axis.

3. A lock according to claim 1 or 2, characterised in that the insertion member is retracted into the locking means when the insertion member is moved to the unlocked position.

4. A lock according to any preceding claim, characterised in that the locking means and the holding member define therebetween a recess for receiving a portion of the article to be locked therein.

5. A lock according to any preceding claim, characterised in that the locking means comprises a locking mechanism and a plunging mechanism to move the insertion member.

6. A lock according to claim 5, characterised in that the plunging mechanism comprises a plunger movable between locked and unlocked positions, the plunger being secured to the insertion member, and the plunger mechanism further including resilient urging means to urge the plunger towards its unlocked position whereby when said plunger is moved to is unlocked position, the insertion member is also moved to its unlocked position.

7. A lock according to claim 6, characterised in that the resilient urging means is arranged between the main body and the plunger and may comprise a compression spring.

8. A lock according to claim 6 or 7, characterised in that the plunger mechanism further includes an elongate stop member to prevent movement of said plunger beyond said unlocked position, thereby to prevent removal of the plunger from the main body.

9. A lock according to claim 8, characterised in that the plunger defines a slot having opposite ends through which said stop member extends, whereby the stop member engages one end of said slot when the plunger is in the unlocked position, to prevent removal thereof.

10. A lock according to any of claims 5 to 9, characterised in that the insertion member is provided with at least one rib adapted to be engaged by a locking member activated by the locking mechanism, wherein the locking member prevents movement of the insertion member to the unlocked position.

11. A motorcycle disc lock comprising a main body comprising a locking means and a holding member, wherein a recess is defined between the locking means and the holding member, and a pin movable between a locking position and an unlocked position, wherein when the pin is in the locked position, the pin extends between the locking means and the holding member, whereby a portion of a motorcycle disc lock can be received in the recess and the pin can be inserted through an aperture in the disc lock to the locked position to lock the motorcycle disc lock to the disc.
